Europäisches Patentamt

European Patent Office

Office européen des brevets

(11) Numéro de publication : **0 463 921 A1**

# (12) DEMANDE DE BREVET EUROPEEN

(21) Numéro de dépôt : **91401599.5**

(51) Int. Cl.⁵ : **G21F 7/005**, G21C 19/20

(22) Date de dépôt : **14.06.91**

(30) Priorité : **27.06.90 FR 9008116**

(43) Date de publication de la demande :
**02.01.92 Bulletin 92/01**

(84) Etats contractants désignés :
**DE GB IT**

(71) Demandeur : **FRAMATOME
Tour Fiat 1, Place de la Coupole
F-92400 Courbevoie (FR)**

(72) Inventeur : **de Seroux, Nicolas
324 rue Garibaldi
F-69007 Lyon (FR)**
Inventeur : **Limouzin, Dominique
74 rue Cuvier
F-69006 Lyon (FR)**

(74) Mandataire : **Bouget, Lucien et al
Cabinet Lavoix 2, Place d'Estienne d'Orves
F-75441 Paris Cédex 09 (FR)**

(54) **Dispositif d'ouverture et de fermeture étanche d'un passage de communication entre un canal central d'un corps creux transportable et un puits vertical ménagé dans une structure fixe.**

(57)    Le dispositif comporte, dans des positions voisines de la surface d'appui (15) du corps creux transportable (1) sur la structure filxe, un organe d'obturation (16) du canal central (3) du corps creux (1) et un organe d'obturation (17) de l'extrémité supérieure du puits (18) disposés à l'intérieur d'une zone de contact d'au moins un joint d'étanchéité torique (13) avec la surface d'appui (15). Chacun des organes d'obturation (16, 17) comporte une surface plane disposée dans sa position de fermeture, suivant la surface plane d'appui (15) du corps creux ou suivant la surface plane d'appui de la structure fixe, respectivement. L'un au moins des organes d'obturation (16, 17) est mobile dans la direction axiale du puits (18) et du canal central (3) du corps creux (1) et dans une direction transversale perpendiculaire à la direction axiale, entre sa position de fermeture et sa position d'ouverture.

EP 0 463 921 A1

FIG_2

L'invention concerne un dispositif d'ouverture et de fermeture étanche d'un passage de communication entre un canal central d'un corps creux transportable et un puits vertical ménagé dans une structure fixe.

En particulier, l'invention est relative à un dispositif d'ouverture et de fermeture étanche d'un passage de communication entre le canal central d'une hotte de transfert d'un assemblage combustible d'un réacteur nucléaire à neutrons rapides refroidi par un métal liquide et un passage de traversée permettant de prélever ou d'introduire un assemblage combustible dans la cuve du réacteur nucléaire ou dans une zone de stockage ou de désactivation de l'assemblage.

Les réacteurs nucléaires à neutrons rapides refroidis par un métal liquide tel que le sodium comportent un coeur constitué par des assemblages de forme prismatique et allongée plongés dans du sodium liquide contenu dans la cuve du réacteur.

Il peut être nécessaire de prélever des assemblages combustibles dans le coeur du réacteur, à l'intérieur de la cuve, par exemple pour remplacer des assemblages usagés ou défectueux par des assemblages neufs. Les assemblages qui sont sortis de la cuve du réacteur sont à l'état irradié et produisent des rayonnements radio-actifs. De plus, ces assemblages ont une activité résiduelle et sont le siège d'un dégagement thermique produit par les réactions nucléaires dans le combustible irradié. Enfin, ces assemblages retiennent, au moment de leur sortie de la cuve, une certaine quantité de sodium liquide.

Les assemblages combustibles sortis de la cuve du réacteur nucléaire doivent donc être disposés dans des conteneurs assurant la protection biologique du milieu dans lequel les assemblages sont déplacés ou stockés de manière temporaire. Il est également nécessaire de refroidir l'assemblage pendant son transfert.

On utilise habituellement, pour effectuer le transfert et le stockage temporaire des assemblages combustibles des réacteurs nucléaires à neutrons rapides, des hottes comportant un corps massif en un matériau absorbant les rayonnements nucléaires dans lequel est ménagé un logement pour un assemblage combustible nu ou noyé dans un étui rempli de sodium pour assurer son refroidissement.

Le logement de l'assemblage réalisé sous la forme d'un canal central à l'intérieur du corps de la hotte débouche, par une ouverture obturable de manière étanche, à l'une des extrémités du corps de la hotte, de manière à permettre l'introduction de l'assemblage dans la hotte et son extraction. Ces opérations sont effectuées après avoir placé la hotte de transfert en appui sur une structure fixe, par exemple une structure solidaire de la dalle de fermeture de la cuve du réacteur, de manière que le canal central de la hotte se trouve dans le prolongement axial d'un puits de traversée de la structure fixe, par exemple d'un puits vertical de traversée de la dalle.

Entre la surface inférieure d'appui du support de la vanne équipant la hotte de transfert et la surface d'appui correspondante de la structure fixe est intercalé un dispositif d'étanchéité comportant au moins un joint torique. Le dispositif d'obturation étanche de l'ouverture du canal central de la hotte débouchant sur la surface d'appui du support de la vanne et un second dispositif de fermeture étanche de l'extrémité supérieure du puits vertical de la structure fixe débouchant sur la surface d'appui de la structure fixe sont disposés a l'intérieur de la zone de contact du joint interne du dispositif d'étanchéité, dans des positions axiales alignées.

Pour réaliser une opération de prélèvement ou d'introduction d'un assemblage combustible, les dispositifs d'obturation du canal central de la hotte et du puits vertical doivent être placés dans leur position d'ouverture, après qu'on ait effectué l'accostage de la hotte de transfert sur la structure fixe. Les dispositifs d'obturation connus dans la technique antérieure sont constitués par des vannes, par exemple à tiroir, à sphère ou à obturateur rotatif, dont les clapets d'obturation se trouvent séparés de par leur conception ou doivent se trouver à une certaine distance verticale l'un de l'autre, après l'accostage de la hotte, de manière à permettre leur manoeuvre aussi bien pour leur ouverture que pour leur fermeture.

Il subsiste donc un espace libre ayant un volume plus ou moins important délimité par le joint interne du dispositif d'étanchéité et par les surfaces externes des clapets, lorsque la hotte a été placée en position d'accostage sur la structure fixe, ce qui présente un inconvénient, dans la mesure où l'on doit éviter tout contact d'un gaz oxydant avec le métal liquide réactif tel que du sodium dans lequel sont plongés les assemblages combustibles du réacteur.

Après avoir effectué le transfert de l'assemblage combustible entre la hotte et la cuve du réacteur, on referme les clapets des vannes d'obturation de la hotte et du puits de passage, si bien qu'un certain volume de gaz pollués par des matières radio-actives se trouve emprisonné dans l'espace compris entre les surfaces extérieures des clapets des vannes.

Il est donc nécessaire d'assurer un balayage de l'espace libre entre les surfaces externes des clapets des vannes, aussi bien après l'accostage de la hotte, pour éliminer toute trace d'oxygène dans cet espace, qu'avant le désaccostage de la hotte, pour éliminer toute trace de gaz susceptible de contaminer le milieu ambiant par des produits radio-actifs.

Ce balayage doit être effectué en utilisant un gaz neutre tel que l'argon, si bien qu'il est nécessaire de disposer d'une réserve d'argon et de moyens de balayage qui doivent être raccordés à la hotte ou au puits vertical de la structure fixe.

En outre, cette opération de balayage de l'espace compris entre les vannes de fermeture de la hotte et du puits vertical augmente le temps nécessaire pour effectuer la manutention de l'assemblage combustible.

Le chargement et le déchargement du coeur d'un réacteur nucléaire nécessitent de nombreuses opérations de transfert d'assemblages combustibles, si bien qu'il est extrêmement important de réduire au maximum le temps d'intervention nécessaire pour le transfert d'un assemblage, dans le but de limiter la période d'immobilisation du réacteur pour rechargement ou déchargement.

Le but de l'invention est donc de proposer un dispositif d'ouverture et de fermeture étanche d'un passage de communication entre un canal central d'un corps creux transportable et un puits vertical ménagé dans une structure fixe comportant une structure d'appui par laquelle débouche la partie supérieure du puits vertical et sur laquelle vient reposer, avec interposition d'au moins un joint d'étanchéité torique, une surface d'appui correspondante du corps creux par laquelle débouche le canal central, dans une position de raccordement dans laquelle une extrémité du canal central du corps creux se trouve dans le prolongement axial du puits pour constituer le passage de communication, comportant, dans des positions voisines de la surface d'appui correspondante, un organe d'obturation du canal central du corps creux et un organe d'obturation de l'extrémité supérieure du puits disposés à l'intérieur d'une zone de contact du joint d'étanchéité torique avec les surfaces d'appui, ce dispositif permettant d'éviter d'emprisonner un volume de gaz entre les organes d'obturation du canal central du corps creux et du puits vertical, lors de la mise en appui du corps creux sur la structure fixe et à l'issue dune opération de transfert d'un composant entre le corps creux et la structure fixe.

Dans ce but, chacun des organes d'obturation comporte une surface plane disposée dans sa position de fermeture, suivant la surface plane d'appui du corps creux ou suivant la surface plane d'appui de la structure fixe respectivement de telle sorte qu'on réduise à un volume négligeable l'espace entre ces deux surfaces planes et l'un au moins des organes d'obturation est mobile dans la direction axiale du puits et du canal central du corps creux et dans une direction transversale perpendiculaire à la direction axiale, entre sa position de fermeture et sa position d'ouverture.

Afin de bien faire comprendre l'invention, on va maintenant décrire, à titre d'exemple non limitatif, en se reportant aux figures jointes en annexe, un mode de réalisation d'un dispositif d'ouverture et de fermeture étanche suivant l'invention appliqué au cas d'une hotte de transfert d'un assemblage combustible pour réacteur nucléaire à neutrons rapides destinée à coopérer avec un passage vertical de traversée de la dalle du réacteur, lors des opérations de déchargement et de rechargement du coeur du réacteur.

La figure 1 est une vue d'ensemble, en perspective éclatée et en coupe partielle, d'une hotte de transfert d'un assemblage combustible pour réacteur nucléaire à neutrons rapides.

La figure 2 est une vue schématique en coupe par un plan vertical d'un dispositif d'ouverture et de fermeture suivant l'invention associé à une hotte de transfert d'un assemblage combustible et à une structure fixe sur laquelle vient reposer la hotte de transfert.

La figure 3 est une vue détaillée en coupe par un plan vertical du dispositif d'ouverture et de fermeture représenté sur la figure 2.

La figure 4 est une vue en coupe suivant 4-4 de la figure 5, de la partie supérieure associée à la hotte de transfert du dispositif d'ouverture et de fermeture représenté sur la figure 3.

La figure 5 est une vue en coupe suivant 5-5 de la figure 4.

La figure 6 est une vue de dessus avec coupe partielle de la partie supérieure du dispositif d'ouverture et de fermeture représenté sur les figures 4 et 5.

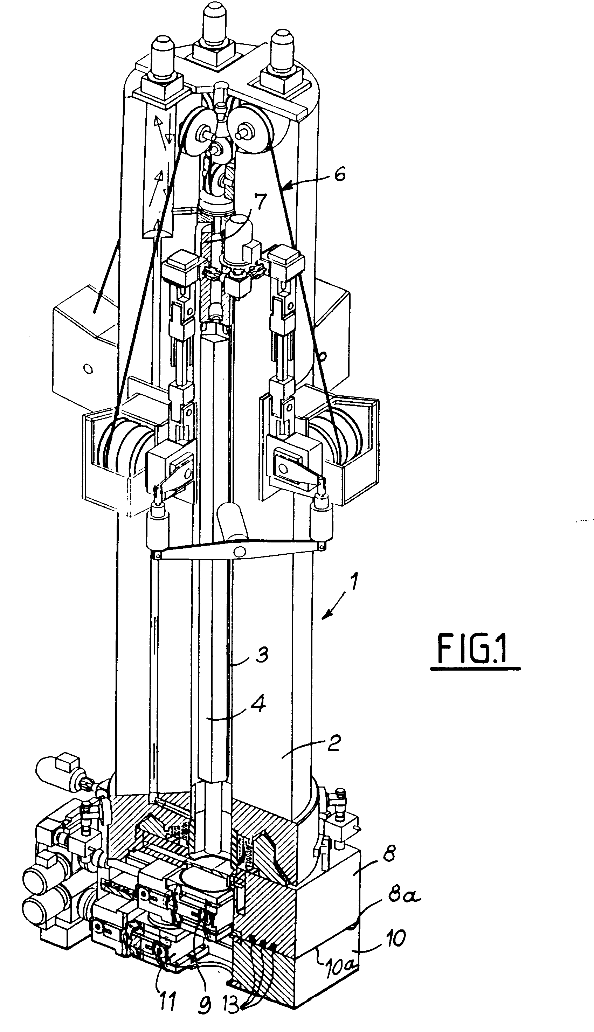

Sur la figure 1, on voit une hotte de transfert d'un assemblage combustible pour réacteur nucléaire désignée de manière générale par le repère 1. La hotte 1 comporte un corps de hotte 2 de forme cylindrique comportant, à sa partie centrale et suivant son axe, un canal 3 traversant le corps de hotte suivant toute sa longueur. Le corps de hotte est constitué par une pièce massive en acier de forte épaisseur et de grande longueur.

Dans le cas d'un assemblage combustible pour réacteur à neutrons rapides dont la longueur est supérieure à 4 m et présentant une section de forme hexagonale dont le côté a une longueur de 125 mm, le corps 2 de la hotte présente un diamètre extérieur de 1,30 m, un canal central d'un diamètre de 0,30 m et une longueur de 6 m. Le corps de la hotte présente donc une épaisseur de paroi de 0,50 m ; sa masse totale est voisine de 55 tonnes.

Sur la figure 1, l'assemblage combustible a été représenté dans sa position de transport à l'intérieur du canal central 3 du corps de la hotte. L'assemblage 4 n'occupe qu'une partie de la longueur du canal 3 ; dans la partie supérieure du canal 3 est placée le grappin 7 du dispositif de levage 6 de l'assemblage.

La partie inférieure du corps 2 se raccorde au support 8 dune vanne de hotte 9 motorisée permettant de réaliser l'ouverture ou la fermeture étanche de l'extrémité du canal 3 à sa partie inférieure débouchant à l'extrémité du corps 2.

Le support 8 de la vanne de hotte 9 est susceptible de venir reposer, par l'intermédiaire d'une surface d'appui 8a, sur une surface d'appui correspondante 10a du support 10 d'une vanne de puits 11 permettant de réaliser l'ouverture ou la fermeture étanche d'un puits de traversée, par exemple un passage de traversée dune dalle recouvrant la cuve d'un réacteur contenant du sodium liquide et renfermant le coeur du réacteur.

Un dispositif d'étancheité comportant des joints toriques 13 est interposé entre les surfaces d'appui 8a et 10a dans la position de raccordement de la hotte de transfert 1 représentée sur la figure 1.

Les organes d'obturation des vannes 9 et 11 sont disposés à l'intérieur de la zone délimitée par le joint torique 13 constituant la partie interne du dispositif d'étanchéité.

Lorsque les vannes 9 et 11 sont superposées et ouvertes, on peut faire passer l'assemblage combustible 4 dune position immergée dans le sodium liquide remplissant la cuve du réacteur, à sa position de transfert à l'intérieur de la hotte 1, en utilisant le dispositif de levage 6.

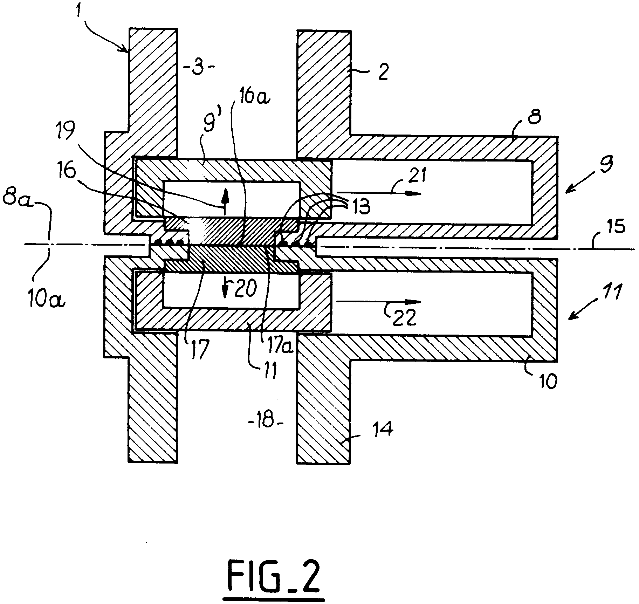

Sur la figure 2, on a représenté de manière schématique la partie inférieure de la hotte 2 comportant le support 8 de la vanne 9 et la partie supérieure de sortie 14 du puits 18 de traversée de la dalle du réacteur comportant le support 10 de la vanne 11.

La vanne 9 comporte un obturateur 16 qui a été représenté sur la figure 2 dans sa position de fermeture. L'obturateur 16 comporte une surface d'étanchéité plane 16a qui se trouve placée, dans la position de fermeture de l'obturateur 16, dans le plan d'appui 8a du support 8 de la vanne 9.

La vanne 11 comporte un obturateur 17 qui a été représenté sur la figure 2 dans sa position de fermeture.

L'obturateur 17 comporte une surface d'étanchéité plane 17a qui se trouve, dans la position de fermeture de l'obturateur 17, dans le plan d'appui 10a du support 10 de la vanne 11.

Lorsque la hotte de transfert 1 vient reposer sur la structure fixe constituée par le puits de traversée 14, les surfaces d'appui 8a et 10a des supports 8 et 10 respectivement viennent s'appliquer l'une sur l'autre suivant le plan de jonction 15. Les joints 13 constitués par un matériau souple tel qu'un élastomère sont écrasés de manière à assurer l'étanchéité entre les surfaces d'appui 8a et 10a venues en contact l'une avec l'autre suivant le plan 15.

Comme il est visible sur la figure 2, lorsque la hotte de transfert 1 vient reposer sur la partie supérieure 14 du puits 18 dans une position permettant le transfert d'un assemblage combustible entre le canal central 3 et le puits vertical 18, les obturateurs 16 et 17 sont placés dans leur position de fermeture, de sorte que les surfaces d'appui et d'étanchéité 16a et 17a, totalement planes et disposées respectivement dans les plans d'appui 8a et 10a, viennent en contact l'une avec l'autre si bien qu'aucune couche d'air n'est présente entre ces surfaces d'étanchéité.

En outre, les obturateurs 16 et 17 peuvent être déplacés à l'intérieur des corps de vanne 9' et 11' respectivement, dans la direction axiale du canal 3 et du puits vertical 18, comme représenté par les flèches 19 et 20 respectivement.

Le déplacement des obturateurs 16 et 17 dans le sens des flèches 19 et 20 permet d'écarter les surfaces d'étanchéité 16a et 17a et de placer les obturateurs 16 et 17 dans les corps de vanne 9' et 11', respectivement.

Les corps de vanne et les obturateurs 16 et 17 peuvent être alors déplacés dans une direction transversale perpendiculaire à la direction axiale du canal 3 et du puits 18, comme représenté par les flèches 21 et 22.

Ce déplacement transversal des obturateurs 16 et 17 et des corps de vanne 9' et 11' permet de mettre en communication le canal 3 avec le puits vertical 18.

Au moment de l'accostage de la hotte 1 sur la partie supérieure 14 du puits 18, aucune couche d'air n'est emprisonnée entre les obturateurs 16 et 17, de sorte qu'il n'est pas nécessaire d'effectuer un balayage de l'lespace compris entre les obturateurs 16 et 17.

Lorsqu'on réalise la fermeture des vannes 9 et 11, après avoir réalisé le transfert d'un assemblage entre le canal central 3 de la hotte 1 et le puits vertical 18, par des déplacements inverses des déplacements décrits précédemment et indiqués par les flèches 19 et 21 et 20 et 22, les obturateurs 16 et 17 se retrouvent dans la position représentée sur la figure 2, de sorte qu'aucune couche gazeuse polluée par des matières radio-actives ne se trouve emprisonnée entre les surfaces d'étanchéité 16a et 17a.

La hotte de transfert 1 peut être désaccostée et soulevée au-dessus de la structure fixe constituée par la surface supérieure 14 du puits 18, sans qu'on ait à effectuer préalablement un balayage par du gaz neutre du volume compris entre les obturateurs 16 et 17.

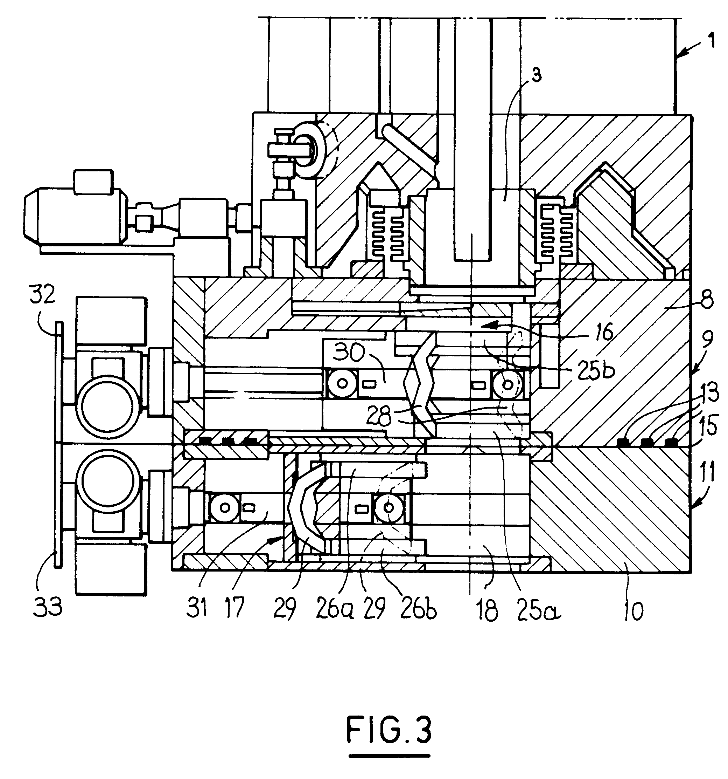

Sur la figure 3, on a représenté plus en détail le dispositif d'ouverture et de fermeture étanche suivant l'invention tel que représenté schématiquement sur la figure 2.

Sur la figure 3, l'obturateur 16 de la vanne de hotte 9 a été représenté dans sa position fermée et l'obturateur 17 de la vanne de puits 11 dans sa position ouverte.

Les obturateurs 16 et 17 sont constitués sous forme articulée et comportent chacun deux plaques parallèles 25a et 25b et 26a et 26b, respectivement. Les plaques 25a et 26a constituent les éléments d'étanchéité des obturateurs 16 et 17 respectivement. Les plaques 25a et 26a comportent chacune une face externe plane définissant la surface d'étanchéité 16a ou 17a de l'obturateur 16 ou 17 correspondant.

Dans la position de fermeture des obturateurs 16 et 17, les faces extérieures planes des plaques 25a et 26a sont situées dans le plan d'accostage 15 de la vanne de hotte 9 sur la vanne de puits 11.

Les plaques 25a et 25b d'une part et 26a et 26b d'autre part sont reliées entre elles par des jeux de biellettes articulées 28 et 29 permettant de maintenir les plaques 25a et 25b et 26a et 26b dans des dispositions parallèles entre elles, pendant leurs déplacements.

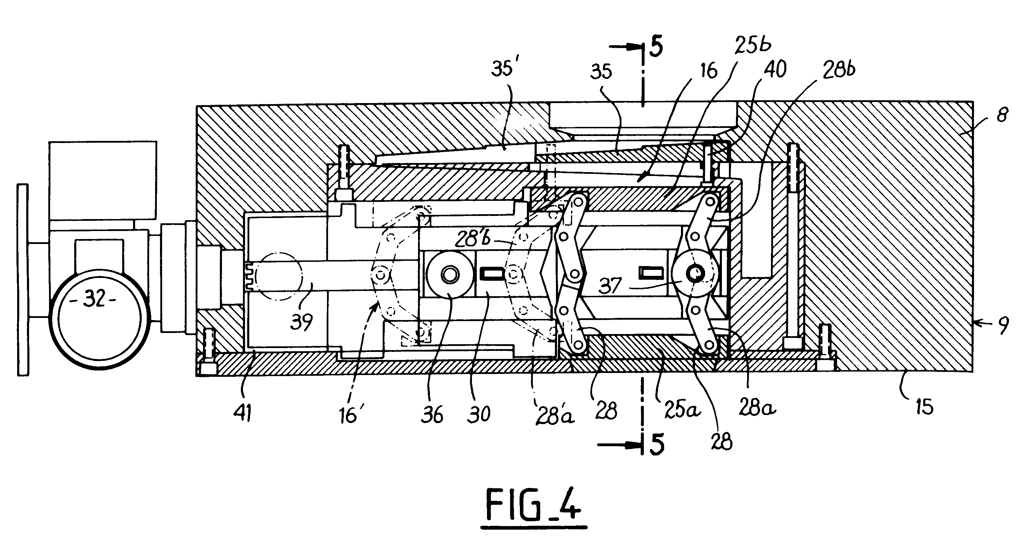

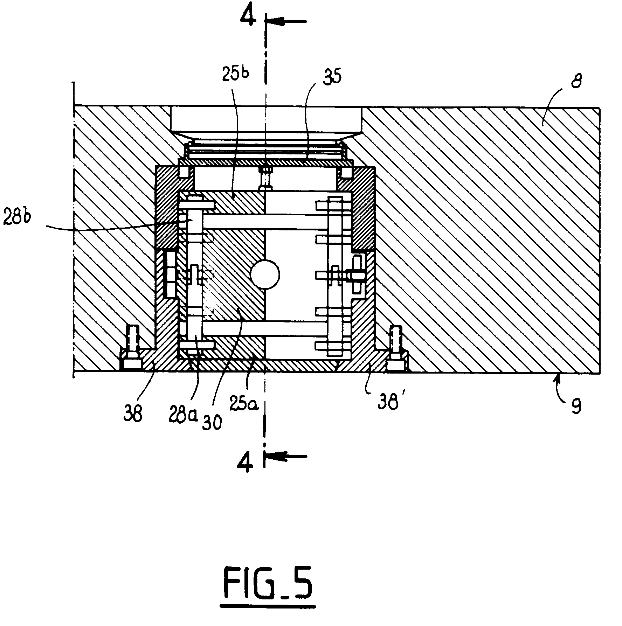

Les ensembles de biellettes 28 et 29 sont montés articulés sur des coulisseaux 30 et 31 respectivement. Les coulisseaux 30 et 31 sont montés mobiles dans une direction transversale perpendiculaire à l'axe du puits et de la hotte, grâce à des moyens de guidage et à des servomoteurs 32, 33 et des vis de commande reliées à l'arbre de sortie des moteurs 32 et 33. Ces moyens de guidage et de déplacement seront décrits plus en détail, en ce qui concerne la vanne de puits 9, en se référant aux figures 4, 5 et 6.

Les vannes 9 et 11 sont sensiblement identiques dans leur structure, la vanne de hotte 9 comportant cependant un obturateur de sécurité complémentaire 35 qui peut être déplacé entre une position dans le prolongement du canal central 3 de la hotte et une position de retrait dans un logement latéral 35', lors du déplacement de l'obturateur 16 entre sa position de fermeture représentée en traits pleins sur la figure 4 et sa position d'ouverture 16' représentée en traits mixtes.

L'ensemble de biellettes 28 de l'obturateur 16 comporte quatre jeux de deux biellettes telles que 28a et 28b articulées entre elles et reliées au coulisseau 30 à l'une de leurs extrémités et aux plaques 25a et 25b à leurs autres extrémités de manière articulée. Chacun des jeux de biellettes est fixé dans une ouverture de forme adaptée ménagée dans le coulisseau 30.

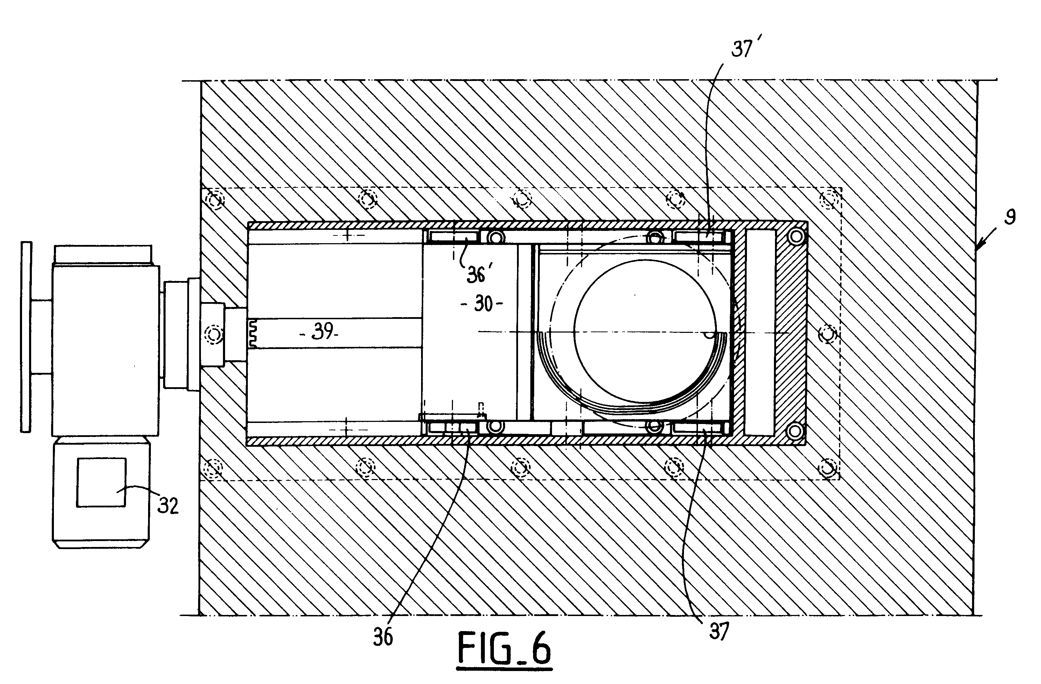

Le coulisseau 30 comporte des éléments de guidage constitués par des galets 36, 36' et 37, 37' (figure 6) montés mobiles à l'intérieur de glissières en deux parties 38, 38' fixées dans le support de vanne 8.

Les déplacements latéraux du coulisseau 30 sont commandés par le moteur 32, par l'intermédiaire d'un réducteur à renvoi d'angle et d'une vis 39 engagée, en position centrale, dans le coulisseau 30.

Les déplacements de l'obturateur supplémentaire 35 sont obtenus grâce à un doigt 40 engagé librement dans une ouverture de l'obturateur 35 et relié à la plaque 25b de l'obturateur 16.

Le fonctionnement de l'obturateur 16 qui a été décrit de manière schématique en regard de la figure 2 sera maintenant décrit plus en détail en se référant en particulier à la figure 4.

En supposant que l'obturateur 16 est dans sa position de fermeture représentée en traits pleins sur la figure 4, l'ouverture de l'obturateur 16 peut être obtenue grâce au servomoteur 32 entraînant la vis 39 et le déplacement latéral du coulisseau 30 guidé par les ensembles à galets et glissières.

La forme des ouvertures dans lesquelles sont engagés les jeux de biellettes de l'ensemble 28 est telle que le déplacement initial du coulisseau 30 se traduit par un pivotement des biellettes telles que 28a et 28b, de telle sorte que leurs extrémités articulées sur les plaques 25a et 25b respectivement se déplacent en direction l'une de l'autre. Les biellettes 28a et 28b viennent se placer dans des positions inclinées telles que 28'a et 28'b, de sorte que les plaques 25a et 25b se déplacent parallèlement l'une par rapport à l'autre et de manière à se rapprocher l'une de l'autre.

Ce déplacement initial des plaques 25a et 25b permet en particulier d'éloigner la surface d'étanchéité de la plaque 25a, du plan d'accostage 15 de la vanne de hotte sur la vanne de puits.

Le servomoteur 33 de la vanne de puits 11 permet de réaliser, simultanément au déplacement de la plaque 25a, le déplacement dans la direction opposée de la plaque 26a de l'obturateur 17 de la vanne de puits.

Le déplacement transversal ultérieur des coulisseaux 30 et 31, après rétraction des plaques des obturateurs 16 et 17 correspondants, se traduit par un déplacement d'ensemble de l'obturateur à l'intérieur des logements tels que 41 des supports de vanne 8 et 10.

Les obturateurs 16 et 17 viennent dans des positions de retrait transversales permettant d'établir une communication entre le canal central 3 de la hotte 1 et le puits 8 de la structure fixe 14.

Simultanément au déplacement transversal de l'obturateur 16, l'obturateur complémentaire 35 est déplacé de manière à venir dans le logement latéral 35' en retrait par rapport au passage de communication entre le canal central de la hotte et le puits 8 de la structure fixe.

Le déplacement dans le sens inverse des obturateurs 16 et 17 obtenu grâce aux servomoteurs 32 et 33 permet, dans un premier temps, de déplacer les obturateurs dans la direction transversale, jusqu'au moment où ces obturateurs se trouvent en vis-à-vis du passage de communication entre le canal central 3 de la hotte et le puits 18 de la structure fixe.

Un déplacement final supplémentaire des coulisseaux correspondants 30 et 31 permet de replacer les plaques 25a et 26a des obturateurs 16 et 17 respectivement dans leur position de fermeture.

Dans cette position, les obturateurs viennent en contact étanche l'un avec l'autre par leurs surfaces planes 16a et 17a situées dans le plan d'accostage 15.

Afin d'éliminer au maximum l'espace libre entre les surfaces 16a et 17a, les surfaces planes métalliques des plaques 25a et 26a peuvent être recouvertes dune couche d'élastomère.

Comme il a été expliqué plus haut en regard de la figure 2, les vannes du dispositif suivant l'invention permettent de réaliser un accostage de la hotte sur la structure fixe sans emprisonner de couche d'air entre les surfaces d'étanchéité des obturateurs.

De même, au moment de la fermeture des obturateurs, après le transfert de l'assemblage entre le puits 18 et le canal central 3 de la hotte, les vannes du dispositif suivant l'invention permettent de réaliser une application des surfaces d'étanchéité 16a et 17a l'une sur l'autre, sans emprisonner de couche de gaz pollué par des matières radio-actives, dans l'espace intérieur des joints 13.

Le dispositif d'ouverture et de fermeture étanche suivant l'invention permet donc d'éviter tout recours à un balayage de la zone située entre les obturateurs par un gaz neutre.

L'invention ne se limite pas au mode de réalisation qui a été décrit.

C'est ainsi que le mécanisme de déplacement dans la direction longitudinale et dans la direction transversale des obturateurs peut être réalisé d'une manière différente de celle qui a été décrite. Les déplacements des obturateurs pourraient être obtenus indifféremment par des moyens mécaniques, pneumatiques ou hydrauliques.

Le dispositif d'ouverture et de fermeture étanche suivant l'invention peut comporter un seul obturateur à déplacement longitudinal et à déplacement transversal tel que les obturateurs 16 et 17, le second obturateur, par exemple l'obturateur du puits de la structure fixe pouvant être constitué par un bouchon ayant une surface plane d'étanchéité, dans le plan d'accostage 15 entre la hotte et la structure fixe traversée par le puits 18. Après ouverture de l'obturateur de la vanne de hotte, le bouchon peut être enlevé par un moyen de manoeuvre associé à la hotte.

Enfin, le dispositif suivant l'invention pourrait être utilisé pour l'ouverture et la fermeture d'un passage de communication entre un canal d'un corps creux transportable différent d'une hotte de manutention d'assemblage combustible et un puits d'une structure fixe dans lequel on introduit un élément transporté à l'intérieur du corps creux.

**Revendications**

1.- Dispositif d'ouverture et de fermeture étanche d'un passage de communication entre un canal central (3) d'un corps creux transportable (1) et un puits vertical (18) ménagé dans une structure fixe (14) comportant une surface d'appui (10a, 15) par laquelle débouche la partie supérieure du puits vertical (18) et sur laquelle vient reposer, avec interposition d'au moins un joint d'étanchéité torique (13), une surface d'appui correspondante (8a) du corps creux (1) par laquelle débouche le canal central (3) dans une position de raccordement dans laquelle une extrémité du canal central (3) du corps creux (1) se trouve dans le prolongement axial du puits (18) pour constituer le passage de communication, comportant, dans des positions voisines de la surface d'appui correspondante (8a, 10a, 15), un organe d'obturation (16) du canal central (3) du corps creux (1) et un organe d'obturation (17) de l'extrémité supérieure du puits (18) disposés à l'intérieur d'une zone de contact du joint d'étanchéité torique (13) avec la surface d'appui (8a, 10a, 15), caractérisé par le fait que chacun des organes d'obturation (16, 17) comporte une surface plane (16a, 17a) disposée dans sa position de fermeture, suivant la surface plane d'appui (8a) du corps creux (1) ou suivant la surface plane d'appui (10a) de la structure fixe (14, 10), respectivement, de telle sorte que l'on réduise à un volume négligeable l'espace entre ces deux surfaces planes et par le fait que l'un au moins des organes d'obturation (16, 17) est mobile dans la direction axiale du puits (18) et du canal central (3) du corps creux (1) et dans une direction transversale perpendiculaire à la direction axiale, entre sa position de fermeture et sa position d'ouverture.

2.- Dispositif suivant la revendication 1, caractérisé par le fait que le ou les organes d'obturation (16, 17) mobiles dans la direction axiale du puits (18) et du canal central (3) et dans une direction transversale est ou sont constitués par deux plaques (25a, 25b) parallèles entre elles et reliées par des ensembles de biellettes articulées (28, 29) à un coulisseau (30, 31) associé à des moyens de déplacement dans la direction transversale (32, 33, 39) et à des moyens de guidage (36, 36', 37, 37', 38, 38') pour le déplacement de l'organe d'obturation correspondant (16, 17) entre sa position de fermeture et sa position d'ouverture, l'une des plaques (25a, 26a) du ou des obturateurs (16, 17) comportant une surface d'étanchéité plane (16a, 17a) venant dans le plan d'appui (15) du corps transportable creux (1) sur la structure fixe (14), dans la position de fermeture de l'obturateur (16, 17).

3.- Dispositif suivant la revendication 2, caractérisé par le fait que les moyens de déplacement (32, 33, 39) des coulisseaux (30, 31) du ou des obturateurs (16, 17) dans la direction transversale sont constitués par un ensemble motoréducteur et une vis de commande.

4.- Dispositif suivant l'une quelconque des revendications 2 et 3, caractérisé par le fait que les moyens de guidage (36, 36', 37, 37') des coulisseaux (30, 31) des dispositifs d'obturation (16, 17) sont constitués par des galets montés rotatifs sur les coulisseaux (30, 31) et par des glissières (38, 38') fixées à l'intérieur d'un corps fixe (8, 10) solidaire du corps creux (1) ou de la structure fixe (14).

5.- Dispositif suivant l'une quelconque des revendications 1 à 4, caractérisé par le fait que la surface plane de chacun des organes d'obturation (16, 17) venant dans le plan d'appui (15) du corps creux transportable (1) ou de la structure fixe (14) est recouverte par un matériau élastomère d'étanchéité.

6.- Dispositif suivant la revendication 2, dans le cas où le corps creux (1) est constitué par une hotte de manutention d'un assemblage combustible pour réacteur nucléaire, caractérisé par le fait qu'il comporte une plaque de fermeture supplémentaire (35) reliée par l'intermédiaire d'un doigt d'actionnement (40) à l'une des plaques (25b) de l'organe d'obturation (16).

FIG.1

# FIG_2

FIG.3

FIG_4

12

FIG.5

FIG_6

EP 0 463 921 A1

EP 0 463 921 A1

**Office européen des brevets**

**RAPPORT DE RECHERCHE EUROPEENNE**

Numero de la demande

EP   91 40 1599

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | EP-A-0 212 028  (COGEMA)<br>* Colonne 1, lignes 42-55; colonne 2, lignes 34-48; colo2ne 3, lignes 1-3,28-43; colonne 4, lignes 1-6; colonne 4, lignes 11-18; figures 2-6 * | 1 | G 21 F    7/005<br>G 21 C   19/20 |
| A |   | 2,4 | |
| A | GB-A-2 175 238  (BRITISH NUCLEAR FUELS)<br>* Page 1, ligne 112 - page 2, ligne 60; figures 4-9 * | 2-4 | |
| A | FR-A-1 346 486  (CEA)<br>* Page 2, dernière ligne - page 3, ligne 21; figures 3-4 * | 1 | |
| A | EP-A-0 267 083  (CEA)<br>* Colonne 11, lignes 16-38; figure 1 * | 1 | |
| P,A | DE-U-9 012 251  (NOELL GmbH)<br>* Pages 2-3; figure * | 1-2 | |

| | DOMAINES TECHNIQUES RECHERCHES (Int. Cl.5) |
|---|---|
| | G 21 C<br>G 21 F |

Le présent rapport a été établi pour toutes les revendications

| Lieu de la recherche | Date d'achèvement de la recherche | Examinateur |
|---|---|---|
| LA HAYE | 27-08-1991 | DEROUBAIX P.G.M. |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons

& : membre de la même famille, document correspondant

EPO FORM 1503 03.82 (P0402)

15